# EUROPÄISCHE PATENTSCHRIFT

(11) **EP 0 489 040 B1**
(45) Veröffentlichungstag und Bekanntmachung des Hinweises auf die Patenterteilung: **22.12.1993**
(21) Anmeldenummer: 90912108.9
(22) Anmeldetag: 18.08.1990
(51) Int. Cl.: G11B 5/86, G11B 27/02

(54) **VERFAHREN UND EINRICHTUNG ZUM KOPIEREN VON MAGNETBÄNDERN**
PROCESS AND DEVICE FOR COPYING MAGNETIC TAPES
PROCEDE ET DISPOSITIF POUR LA COPIE DE BANDES MAGNETIQUES

(30) Priorität: 25.08.1989 DE 3928190; 26.08.1989 DE 3932059
(43) Veröffentlichungstag der Anmeldung: 10.06.1992
(73) Patentinhaber: DEUTSCHE THOMSON-BRANDT GMBH, 78048 Villingen-Schwenningen (DE)
(72) Erfinder: EIGELDINGER, Norbert, D-7730 Villingen (DE); BILDL, Michael, D-7710 Pfohren (DE)
(74) Vertreter: Einsel, Robert, Dipl.-Ing.
(86) Internationale Anmeldenummer: EP9001360
(87) Internationale Veröffentlichungsnummer: WO9103044

(56) Entgegenhaltungen:
- US-A- 4 510 535
- Patent Abstracts of Japan, vol. 12, no. 220, P-720, abstract from JP-63-14389, publ. 1988-01-21
- Patent Abstracts of Japan, vol. 10, no. 259, E-434 abstract from JP-61 84180, publ. 1986-04-28

## Beschreibung

Die Erfindung betrifft ein Verfahren zum Kopieren von Magnetbändern, insbesondere von Audio- oder Video- oder Daten-Magnetbändern. Die Erfindung betrifft auch eine Einrichtung zur Durchführung des Verfahrens.

Bei herkömmlichen Kopierverfahren werden auf einem bereits bespielten Informationsträger befindliche Nutzinformationen von einem Abspielgerät wiedergegeben, über eine Übertragungsstrecke zu einem Aufzeichnungsgerät weitergeleitet und auf einen zu bespielenden Informationsträger aufgezeichnet. Auf dem zu bespielenden Informationsträger sind im Idealfall nach Abschluß des Überspielvorgangs dieselben Nutzinformationen enthalten wie auf dem Original. Von dem Kopiervorgang nicht betroffen sind etwaige Zusatzinformationen, die bei gewissen Aufzeichnungsstandards - beispielsweise beim VHS-Standard - zur geräteinternen Steuerung des Wiedergabebetriebes zusätzlich zu der eigentlichen Nutzinformation aufgezeichnet werden.

Solche Steuerinformationen werden im Gerät während des Aufzeichnungsvorgangs erzeugt und dienen bei Videorecordern beispielsweise dazu, das Umschalten zwischen mehreren Abtastköpfen einer rotierenden Kopfscheibe bei einem späteren Wiedergeben zu synchronisieren. Die Synchronisationsimpulse werden auf einer Steuer- oder Kontrollspur ("CTL") genannten Längsspur parallel zur Bandkante aufgezeichnet und bestehen im wesentlichen aus scharfen Übergängen von einer Nord- zu einer Süd- bzw. von einer Süd- zu einer Nord-Magnetisierung, wobei es genügt, ständig jeweils zwei aufeinanderfolgende gleichartige Übergänge, beispielsweise von Nord- auf Süd-Magnetisierung, zu betrachten, zwischen denen beim Aufzeichnen beispielsweise eine definierte Zeitspanne von 40 msec verstreicht. Die jeweils anderen Übergänge, im genannten Beispiel also die Übergänge von Süd- auf Nord-Magnetisierung, werden zum Synchronisieren nicht benötigt und können daher in ihrer Relativlage innerhalb des erwähnten 40 msec umfassenden Zeitfensters innerhalb gewisser Grenzen variiert werden, ohne daß hierdurch die ursprüngliche Aufgabe der Synchronisation mittels der Steuerspur zu beeinträchtigt wird.

Die Variation der Relativlage der Süd-/Nord-Übergänge kann somit beispielsweise zu einer digitalen Codierung verwendet werden. Im VHS-Standard ist hiervon Gebrauch gemacht worden, um auf dem Magnetband magnetische Marken - etwa zum bildgenauen Auffinden bestimmter Stellen einer Aufzeichnung - setzen zu können. Dabei werden zwei Typen von Marken unterschieden, zum einen sogenannte VISS-Marken (VHS-Index-Such-System), die eine unveränderbare digitale Information darstellen, und sogenannte VASS-Marken (VHS-Adress-Such-System), die eine individuelle Adresse in digital codierter Form enthalten.

Insbesondere beim Aufzeichnen von im Verhältnis zur gesamten Bandlänge relativ kurzen Beiträgen als Nutzinformation ist das gleichzeitige Setzen einer Marke beim Starten einer Aufzeichnung zum exakten Auffinden des Anfangs eines solchen Beitrages im Wiedergabebetrieb von Vorteil. Wird nun ein bespieltes Band, das zusätzlich mit solchen Marken versehen ist, jedoch kopiert, so wird dabei bei Kopierverfahren nach dem Stand der Technik lediglich die Nutzinformation, nicht jedoch die Information bezüglich der Marken überspielt, da letztere ja in einem Bereich aufgezeichnet ist, der lediglich für geräteinterne, also vom Benutzer nicht unmittelbar beeinflußbare Steuerzwecke des Wiedergabebetriebes vorgesehen war.

Aus Patent Abstracts of Japan, Vol. 12, No. 220 (P-720) ist ein Verfahren nach dem Oberbegriff des Anspruchs 1 bekannt, bei dem auf der Seite des wiedergebenden Videorecorders eine Integration von durch Tastverhältnisse erhaltenen Spannungen erfolgt. Sofern bei der Integration ein vorbestimmter Schwellpegel überschritten wird, wird an den aufzeichnenden Videorecorder ein die Steuerspur betreffendes Signal abgegeben. Bei dem bekannten Verfahren mit Integration ist es folglich nicht möglich, aus mehreren Bits bestehende, auf der Steuerspur des zu kopierenden Bandes enthaltene Adressen zu überspielen.

Der Erfindung liegt die Aufgabe zugrunde, beim Kopieren von Magnetbändern eine in einer Steuerspur enthaltene Zusatzinformation beim Kopieren mit zu übertragen.

Diese Aufgabe wird durch die in Anspruch 1 angegebenen Merkmale gelöst. Diese Aufgabe wird auch durch die in Anspruch 7 angegebenen Merkmale gelöst.

Vorzugsweise geschieht das Aufzeichnen in dem nächsterreichbaren Zeitfenster zugleich mit dem Aufzeichnen der Steuerspur.

Das Übertragen der digitalen Information "0" oder "1" kann über eine der sogenannten SCART-Verbindungsleitungen erfolgen, wobei ein Pegel von 0 bzw. 5 Volt den digitalen Informationen "0" bzw. "1" entsprechen kann.

Es ist vorgesehen, daß zunächst auf der Seite des wiedergebenden Gerätes die digitalen Informationen solange in einem Pufferspeicher zwischengespeichert werden, bis eine aus mehreren Bits bestehende Adresse komplett eingelesen ist; diese komplette Adresse kann sodann über serielle Schnittstellen und eine dazwischen angeordnete Infrarotstrecke an das aufzeichnende Gerät übertragen werden, wo sie dann wieder in einer digital codierten Form mit der Steuerspur aufgezeichnet wird.

Es kann ferner vorgesehen sein, eine solche Adresse über einen D2B-Bus von dem wiedergebenden zu dem aufzeichnenden Gerät zu übertragen. Dieser D2B-Bus ist von der Internationalen Elektrotechnischen Kommission (IEC) in einer mit "Projekt Nr. 84.12.05001" bezeichneten Druckschrift (Ausgabe Juni 1988) spezifiziert worden. Bei der Übertragung von Index- oder Adress-Daten kann ein serielles Übertragen, also Bit für Bit, vorgesehen sein. Es kann aber auch vorgesehen sein, den D2B-Bus zu einer Übertragung der Daten gemäß dem vorerwähnten Infrarot-Übertragungsformat zu benutzten. Letzteres bietet gegenüber einer fortlaufenden seriellen Übertragung den Vorteil, daß es den Bus nur kurzzeitig belastet und ist daher einer fortlaufenden seriellen Übertragung vorzuziehen.

Es versteht sich, daß anstelle des D2B-Busses auch jede andere Datenbusverbindung verwendet werden kann.

Weitere Merkmale, Vorteile und Einzelheiten der Erfindung werden im folgenden an Hand der Zeichnung erläutert. Dabei zeigen:
- Fig. 1: in schematischer Weise eine Darstellung einer für eine Steuerspur eines VHS-Videorecorders verwendbare digitale Codierung,
- Fig. 2: den Aufbau eines Adresse-Codes,
- Fig. 3: eine schematische Darstellung eines Infrarot-Übertragungsformates,
- Fig. 4: in einem Blockschaltbild ein Ausführungsbeispiel einer erfindungsgemäßen Einrichtung zur Durchführung des Kopierverfahrens,
- Fig. 5: eine Einzelheit der Einrichtung in Fig. 4 und
- Fig. 6: ein Flußdiagramm für den Programmablauf in der in Fig. 5 dargestellten Einzelheit.

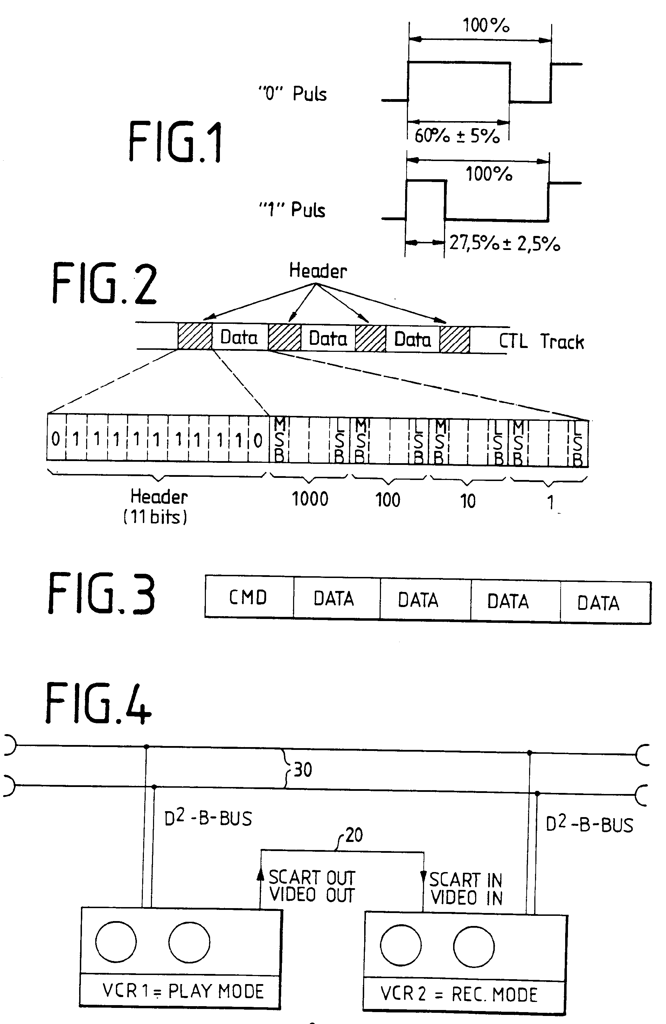

In Fig. 1 ist ein mit 100% bezeichnetes, im VHS-Standard für das 625 Zeilen/50Hz/PAL-Fernsehübertragungsverfahren 40 msec umfassendes Zeitfenster von einer positiven Flanke (entsprechend etwa einem Nord-/Süd-Magnetisierungsübergang) bis zur nächsten positiven Flanke schematisch dargestellt. Befindet sich die zwischen den beiden positiven Flanken auftretende negative Flanke (entsprechend also einem Süd-/Nord-Magnetisierungsübergang) im Bereich 60% ± 5% (Fig. 1a), so wird hierdurch der digitale Wert "0" codiert, befindet sich die negative Flanke hingegen im Bereich von 27,5% ± 2,5% (Fig. 1b), so wird hierdurch der digitale Wert "1" codiert.

In Fig. 2 ist schematisch dargestellt, wie ein auf der Steuerspur eines VHS-Magnetbandes aufgezeichneter Adress-Code aufgebaut ist. Ein solcher Adress-Code besteht aus vier Headern, die jeweils aus elf Bits bestehen. Zwischen je zwei Headern ist ein Datenwort eingefügt, wobei jedes dieser Datenwörter aus vier BCD-Ziffern besteht, die ihrerseits wiederum aus vier Bits bestehen. Die Header sind dabei wie folgt aufgebaut: Einem ersten Bit "0" folgen neun Bits "1", sodann ein Bit "0". Ein Header besteht somit insgesamt aus elf Bits. Für die Datenwörter gilt folgendes: In Aufzeichnungsrichtung der vier eine BCD-Ziffer bildenden Bits wird mit dem höchstwertigen Bit begonnen. Der Stellenwert der vier BCD-Ziffern wird entsprechend der Aufzeichnungsrichtung definiert als Tausender, Hunderter, Zehner bzw. Einer. Als Bezugsposition dient die anfängliche "0" des ersten Headers in Aufzeichnungsrichtung.

In Fig. 3 ist ein Infrarot-Übertragungformat zum Übertragen einer auf der Steuerspur enthaltenen Adresse dargestellt. Diese Adresse besteht, wie zu Fig. 2 beschrieben, aus vier BCD-Ziffern, so daß der Zahlenbereich von 0000 bis 9999 zur Verfügung steht. In Fig. 3 ist jede dieser Ziffern symbolisch mit "DATA" bezeichnet, sie können gleichwohl unterschiedliche Werte annehmen. Ein den BCD-Ziffern vorgestelltes Kommandowort CMD gibt Aufschluß darüber, welche Art von Daten gesendet bzw. empfangen werden. Als integrierte Schaltkreise für Sender zu einer solchen Infrarot-Übertragungsstrecke, die ein dem in Fig. 3 dargestellten Übertragungsformat entsprechendes Format generieren, können beispielsweise die Sender-ICs der Fa. Mitsubishi Electric Corporation, 2 - 3 marunouchi, Tokyo, Japan, mit der Bezeichnung M 50467 dienen.

In Fig. 4 ist in einem Blockschaltbild ein Ausführungsbeispiel einer erfindungsgemäßen Einrichtung zur Durchführung des Kopierverfahrens gezeigt.

Ein erster Videorecorder VCR1 befindet sich im Wiedergabebetrieb, ein zweiter Videorecorder VCR2 im Aufzeichnungsbetrieb. Die beiden Recorder VCR1, VCR2 sind über eine Leitung 20, die eine SCART- oder eine Video-Leitung sein kann, miteinander verbunden. Über diese Leitung 20 werden Bild und Ton vom einen (VCR1) zum anderen (VCR2) Videorecorder in herkömmlicher Weise übertragen. Die Videorecorder VCR1, VCR2 sind ferner beide an einen D2B-Bus 30 angeschlossen, über den sie entsprechend dem von der IEC festgelegten Standard miteinander Daten und Befehle austauschen können.

Werden im ersten Recorder VCR 1 von einem der Steuerspur zugeordneten Aufnahme-/Wiedergabekopf ("CTL-Kopf") und einer diesem zugehörenden Codier-/Decodierelektronik beim Abspielen des Bandes auf der Steuerspur enthaltene digitale Daten, wie etwa VISS- oder VASS-Marken entsprechende Daten, erkannt, so werden diese beispielsweise über den D2B-Bus 30 an den zweiten Videorecorder VCR2 übertragen, wo sie dann mittels dessen CTL-Kopfes und der diesem zugeordneten Codier-/Decodierelektronik während des laufenden Aufzeichnungsvorganges bei nächstmöglicher Gelegenheit in digital codierter Form mit der Steuerspur aufgezeichnet werden.

Das Übertragen der in der Steuerspur digital codierten Daten kann auch in Form kompletter Datenwörter erfolgen; dies geschieht dann beispielsweise nach dem zur Fig. 3 beschriebenen Infrarot-Übertragungsformat.

Bei dem Übertragungsverfahren ist es zwar unvermeidlich, daß auf der Kopie zwischen der Bild-/Ton-Nutzinformation einerseits und der auf der Kopie aufgezeichneten VISS- bzw. VASS-Marke, verglichen mit dem Original, ein zeitlicher Versatz der betreffenden Marke auftritt. Diese Verzögerung beim Kopieren der Marke ist jedoch relativ geringfügig. Je nach Übertragungsweise sowie Besetzt- oder Freisein der Übertragungsstrekke kann dieser Versatz größenordnungsmäßig etwa im Bereich einer Sekunde bzw. von ein paar Sekunden liegen.

Verglichen mit herkömmlichen Kopierverfahren, bei denen ja solche Marken nicht mit übertragen werden können, sondern mühsam die betreffende Stelle auf der Kopie erst aufgesucht und dann eine Marke manuell über eine Tastatur in die Kopie eingefügt werden muß, kann ein solcher geringfügiger zeitlicher Versatz ohne weiteres in Kauf genommen werden. Sollte der Versatz gleichwohl in Ausnahmefällen als störend betrachtet werden, so kann vorgesehen sein, in einem die Steuerspur der Kopie betreffenden Wiedergabebetrieb die Marken automatisch aufzusuchen und entsprechend einem vorbestimmten oder eingebbaren zeitlichen Betrag auf der Steuerspur versetzt erneut aufzuzeichnen. Dabei kann es genügen, daß die jeweils "alte" Marke lediglich überschrieben wird, ohne daß sie gesondert gelöscht zu werden braucht.

Anstelle des D2B-Busses kann auch jeder andere Datenbus Verwendung finden. Beispielsweise können hierfür die noch freien Pins der SCART-Leitung 20 vorgesehen sein.

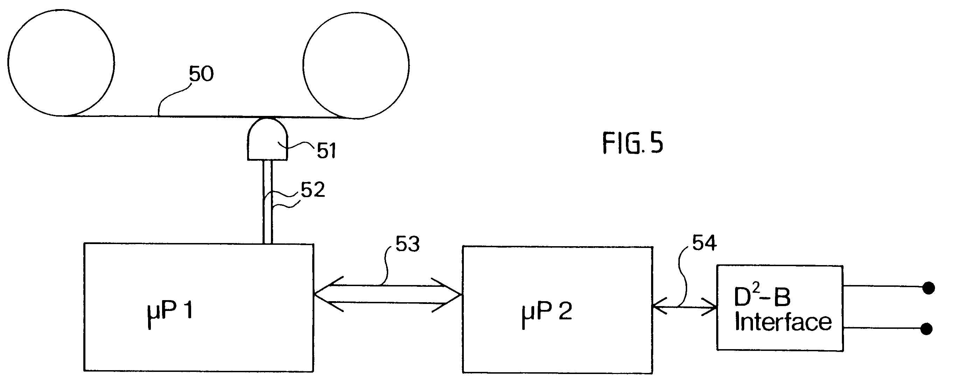

In Fig. 5 ist am Beispiel des für die Wiedergabe vorgesehenen Videorecorders VCR1 aus Fig. 4 gezeigt, auf welchem Weg die in der Steuerspur des zu kopierenden Bandes 50 enthaltenen Daten, wie etwa die VISS- oder VASS-Marken entsprechenden Daten, gelesen und gegebenenfalls verarbeitet und weitergeleitet werden können.

Der der Steuerspur des Bandes 50 zugeordnete Aufnahme-/Wiedergabekopf ("CTL"-Kopf) 51 des Recorders VCR1 liest im Wiedergabebetrieb die auf der Steuerspur enthaltenen Daten aus. Diese Daten gelangen über Leitungen 52 zu einem sogenannten Servoprozessor µP1, der die darin gemäß der betreffenden Aufzeichnungsnorm - hier etwa gemäß der VHS-Norm - enthaltenen Steuerinformationen normgerecht weiterverarbeitet, wodurch beispielsweise die spurgerechte Ansteuerung der Videoköpfe des Recorders VCR1 sichergestellt wird. Von dem Servoprozessor µP1 gelangen ferner die die Bandmarken betreffenden Daten über eine serielle Schnittstelle 53 zu einem sogenannten Keyboardprozessor µP2, der die Daten liest und aufbereitet.

Der Keyboardprozessor µP2 steuert beispielweise eine Anzeigeeinheit an, mit der die Marken - etwa als Dezimalzahlen oder als alphanumerische Zeichen - angezeigt werden können. Auch das Abspeichern von Bandmarken - beispielsweise im nicht hier sondern bei dem Videorecorder VCR2 vorliegenden - Aufzeichnungsbetrieb kann durch den Keyboardprozessor µP2 gesteuert werden. Im Keyboardprozessor µP2 werden ferner die die Bandmarken betreffenden Daten nach dem zu übertragenden Protokoll (D2B-Bus oder ein sonst vorgesehenes Bussystem) aufbereitet.

Der Keyboardprozessor µP2 steuert schließlich auch den Transfer der die Bandmarken betreffenden Codes zu bzw. von einem D2B-Interface über eine Leitung 54, das über Leitungen 55 an den D2B-Bus 30 (Fig. 4) angeschlossen ist.

Über diesen D2B-Bus 30 werden die Codes zu dem für das Aufzeichnen vorgesehenen Videorecorder VCR2 (Fig. 4) weitergeleitet. In dem Videorecorder VCR2 werden sie - in entsprechend umgekehrter Weise wie bei dem Videorecorder VCR1 - zusammen mit den von dem dortigen Servoprozessor erzeugten Steuerdaten mittels des CTL-Kopfes des Videorecorders VCR2 auf der Steuerspur des für die Kopie vorgesehenen Bandes aufgezeichnet.

D2B-Interface und D2B-Bus sind vorstehend wiederum stellvertretend für sonstige geeignete Bussysteme genannt. Hierfür können etwa das I2C-Bussystem, RS232-Schnittstellenverbindungen oder dergleichen vorgesehen sein.

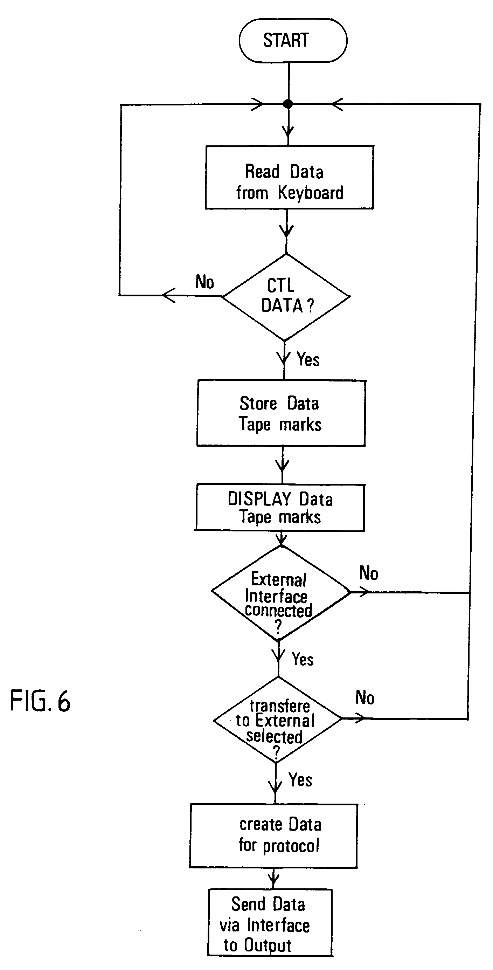

In Fig. 6 ist ein Flußdiagramm für ein in dem Keyboardprozessor µP2 ablaufendes Programm am Beispiel des Videorecorders VCR1 dargestellt, der hier als Wiedergabegerät vorgesehen ist. Es versteht sich, daß für den Aufzeichnungsbetrieb, wie er für den Videorecorder VCR2 in Fig. 4 dargestellt ist, ein entsprechend angepaßtes Programm vorgesehen ist. Es versteht sich ferner, daß die Videorecorder VCR1 und VCR2 vorzugsweise sowohl für Wiedergabe- als auch für Aufzeichnungsbetriebsart eingerichtet sind.

Am Startpunkt des in Fig. 6 dargestellten Programms wird zunächst der Zustand der Bedientastatur des Videorecorders VCR1 eingelesen. Sodann wird überprüft, ob die vom CTL-Kopf gelesene Spur Daten enthält ("CTL DATA?"), die Bandmarken darstellen. Ist dies nicht der Fall, so erfolgt ein Rücksprung zum Startpunkt. Andernfalls werden diese Daten als Bandmarken gespeichert und auf einer Anzeigeeinheit angezeigt.

Anschließend wird überprüft, ob ein externes Interface - etwa die Anwesenheit eines weiteren Videorecorders signalisierend - über den Busausgang des Videorecorders VCR1 angeschlossen ist. Ist dies nicht der Fall, so findet ein Rücksprung zum Startpunkt statt. Andernfalls wird überprüft, ob eine Übertragungsbetriebsart bezüglich des externen Gerätes gewählt ist ("transfer to External selected?"). Ist dies nicht der Fall, so findet ein Rücksprung zum Startpunkt statt.

Andernfalls werden die Daten für das Übertragungsprotokoll erzeugt und schließlich über das D2B-Interface des Videorecorders VCR1 an die D2B-Busleitungen ausgegeben. Mit einem Rücksprung zum Startpunkt beginnt das Programm von neuem.

## Patentansprüche

1. Verfahren zum Kopieren von Magnetbändern, insbesondere von Audio- oder Video- oder Daten-Magnetbändern, wobei beim Kopieren der Magnetbänder von einem ersten, wiedergebenden Bandgerät (VCR1) erkannte auf einer Steuerspur des zu kopierenden Bandes (50) enthaltene digitale Zusatzinformationen über eine Übertragungsstrecke (20; 30) an ein zweites, aufzeichnendes Bandgerät (VCR2) übermittelt werden und dort in einem entsprechenden Zeitfenster wieder in einer digital codierten Form auf die Steuerspur aufgezeichnet werden, **dadurch gekennzeichnet**, daß zunächst auf der Seite des wiedergebenden Gerätes die digitalen Informationen solange in einem Pufferspeicher zwischengespeichert werden, bis eine aus mehreren Bits bestehende Adresse komplett eingelesen ist, daß sodann diese Adresse komplett über serielle Schnittstellen (D²B-Interfaces) an das aufzeichnende Gerät (VCR2) übertragen wird, wo sie dann wieder in einer digital codierten Form mit der Steuerspur aufgezeichnet wird.

2. Verfahren nach Anspruch 1, **dadurch gekennzeichnet**, daß die Übertragung der Adresse über eine zwischen den seriellen Schnittstellen (D²B-Interfaces) gegebenenfalls angeordnete Infrarotstrecke erfolgt.

3. Verfahren nach Anspruch 1 oder 2, **dadurch gekennzeichnet**, daß diese Aufzeichnung in dem nächst erreichbaren Zeitfenster zugleich mit dem Aufzeichnen der Steuerspur erfolgt.

4. Verfahren nach einem der vorstehenden Ansprüche, **dadurch** **gekennzeichnet**, daß das Übertragen einer digitalen Information "0" oder "1" über eine von sogenannten SCART-Verbindungsleitungen (20) erfolgt.

5. Verfahren nach Anspruch 4, **dadurch gekennzeichnet**, daß ein Pegel von etwa 0 bzw. etwa 5 Volt den digitalen Informationen "0" bzw. "1" entspricht.

6. Verfahren nach einem der vorstehenden Ansprüche, **dadurch** **gekennzeichnet**, daß eine Adresse über einen D2B-Bus (30) von dem wiedergebenden (VCR1) zu dem aufzeichnenden Gerät (VCR2) übertragen wird.

7. Einrichtung zum Kopieren von Magnetbändern, insbesondere von Audio- oder Video- oder Daten-Magnetbändern, wobei beim Kopieren der Magnetbänder von einem ersten, wiedergebenden Bandgerät (VCR1) erkannte auf einer Steuerspur des zu kopierenden Bandes (50) enthaltene digitale Zusatzinformationen über eine Übertragungsstrecke (20; 30) an ein zweites, aufzeichnendes Bandgerät (VCR2) übermittelt werden und dort in einem entsprechenden Zeitfenster wieder in einer digital codierten Form auf die Steuerspur aufgezeichnet werden, **dadurch** **gekennzeichnet**, daß auf der Seite des wiedergebenden Gerätes ein Pufferspeicher vorgesehen ist, in dem die digitalen Informationen zunächst solange zwischengespeichert werden, bis eine aus mehreren Bits bestehende Adresse komplett eingelesen ist, und daß serielle Schnittstellen (D²B-Interfaces) vorgesehen sind, über die sodann diese Adresse komplett an das aufzeichnende Gerät (VCR2) übertragen wird, wo sie dann wieder in einer digital codierten Form mit der Steuerspur aufgezeichnet wird.

## Claims

1. Method for copying magnetic tapes, in particular, audio- or video- or data- magnetic tapes, wherein additional items of digital information contained in a control track of the tape which is being copied (50) that are detected when copying the magnetic tapes from a first, reproducing tape device (VCR1), are transmitted via a transmission path (20; 30) to a second, recording tape device (VCR2) and are recorded there in a digitally coded form onto the control track during a corresponding time window, characterised in that, initially, at the reproducing device end, the items of digital information are intermediately stored in a buffer store for a length of time sufficient for an address consisting of a plurality of bits to be completely written in, that thereafter this address is completely transmitted via serial interfaces (D²B-interfaces) to the recording device (VCR2) where it is then re-recorded in a digitally coded form by the control track.

2. Method in accordance with Claim 1, characterised in that, if necessary, the transmission of the address takes place via an infra-red path arranged between the serial interfaces (D²B-interfaces).

3. Method in accordance with Claim 1 or 2, characterised in that, this recording takes place in the next attainable time window conjointly with the recording of the control track.

4. Method in accordance with any of the preceding Claims, characterised in that, the transmission of an item of digital information "0" or "1" takes place via so-called Scart-connecting cables (20).

5. Method in accordance with Claim 4, characterised in that, the level of approximately 0 or approximately 5 volt corresponds to the items of digital information "0" or "1".

6. Method in accordance with any of the preceding Claims, Claims, characterised in that, an address is transmitted from the reproducing (VCR1) to the recording device (VCR2) via a D2B-bus (30).

7. Apparatus for copying magnetic tapes, in particular, audio- or video- or data- magnetic tapes, wherein additional items of digital information contained in a control track of the tape which is being copied (50) that are detected when copying the magnetic tapes from a first, reproducing tape device (VCR1), are transmitted via a transmission path (20; 30) to a second recording tape device (VCR2) and are recorded there in a digitally coded form onto the control track during a corresponding time window, characterised in that, at the reproducing device end, there is provided a buffer store in which the items of digital information are initially intermediately stored for a length of time sufficient for an address consisting of a plurality of bits to be completely written in, and that serial interfaces (D²B-interfaces) are provided via which this address is thereafter completely transmitted to the recording device (VCR2) where it is then re-recorded in a digitally coded form by the control track.

## Revendications

1. Procédé pour la copie de bandes magnétiques, en particulier de bandes magnétiques audio ou vidéo ou de données, des informations supplémentaires numériques, contenues sur une piste de commande de la bande à copier (50), qui ont été reconnues par un premier appareil à bande de lecture (VCR1) étant transmises, lors de la copie des bandes magnétiques, par un trajet de transmission (20; 30) à un second appareil à bande d'enregistrement (VCR2) et y étant enregistrées dans une fenêtre de temps correspondante sur la piste de commande à nouveau sous une forme codée numériquement, caractérisé en ce que les informations numériques sont tout d'abord mises en mémoire temporaire sur le côté de l'appareil de lecture dans une mémoire tampon jusqu'à ce qu'une adresse constituée par plusieurs bits soit complètement entrée, que cette adresse est ensuite complètement transmise par des interfaces série (interfaces D2B) à l'appareil d'enregistrement (VCR2) où elle est ensuite enregistrée à nouveau sous une forme codée numériquement avec la piste de commande.

2. Procédé selon la revendication 1, **caractérisé en ce** que la transmission de l'adresse se fait par un trajet à infrarouge, le cas échéant placé entre les interfaces série (interfaces D2B).

3. Procédé selon la revendication 1 ou 2, **caractérisé en ce** que cet enregistrement se fait dans la fenêtre de temps la plus proche qui peut être atteinte en même temps que l'enregistrement de la piste de commande.

4. Procédé selon l'une des revendications précédentes, **caractérisé en ce** que la transmission d'une information numérique "0" ou "1" se fait par l'une de ce qu'il est convenu d'appeler des lignes de jonction SCART (20).

5. Procédé selon la revendication 4, **caractérisé en ce** qu'un niveau d'environ 0 ou d'environ 5 Volt correspond aux informations numériques "0" ou "1".

6. Procédé selon l'une des revendications précédentes, **caractérisé en ce** qu'une adresse est transmise par un bus D2B (30) par l'appareil de lecture (VCR1) à l'appareil d'enregistrement (VCR2).

7. Dispositif pour la copie de bandes magnétiques, en particulier de bandes magnétiques audio ou vidéo ou de données, des informations supplémentaires numériques, contenues sur une piste de commande de la bande à copier (50), qui ont été reconnues par un premier appareil à bande de lecture (VCR1) étant transmises, lors de la copie des bandes magnétiques, par un trajet de transmission (20; 30) à un second appareil à bande d'enregistrement (VCR2) et y étant enregistrées dans une fenêtre de temps correspondante sur la piste de commande à nouveau sous une forme codée numériquement, **caractérisé en ce** qu'il est prévu une mémoire tampon du côté de l'appareil de lecture dans laquelle les informations numériques sont mises en mémoire temporaire tout d'abord jusqu'à ce qu'une adresse constituée par plusieurs bits soit complètement entrée et que des interfaces série (interfaces D2B) sont prévues par lesquelles cette adresse est ensuite complètement transmise à l'appareil d'enregistrement (VCR2) où elle est alors enregistrée à nouveau sous une forme codée numériquement avec la piste de commande.
